# EUROPEAN PATENT APPLICATION

(11) **EP 1 431 860 A2**
(43) Date of publication of application: **23.06.2004**
(21) Application number: 03257625.8
(22) Date of filing: 03.12.2003
(51) Int. Cl.: G06F 1/00

(54) **Information protection**

(30) Priority: 06.12.2002 JP 2002355117
(71) Applicant: Pioneer Corporation, Tokyo-to (JP)
(72) Inventor: Yoshimura, Ryuichiro, Tokorozawa-shi Saitama-ken (JP); Yokotsuka, Hidehiko, Tokorozawa-shi Saitama-ken (JP); Nitta, Satoshi, Tokorozawa-shi Saitama-ken (JP)
(74) Representative: Townsend, Victoria Jayne

(57) **Abstract**

Authentication information encrypted by using a predetermined encryption method is added to contents information. When executing or reproducing the contents information by using an information processing apparatus, a decision is made whether information encrypted by using the predetermined encryption method is contained in acquired information. When such information is not contained, the contents information is not reproduced, executed, or output.

## Description

### BACKGROUND OF THE INVENTION

### 1. Field of the Invention

The present invention relates to an information processing apparatus, and information processing method, for reproducing or executing information, such as a computer program, a game program, image information or voice information, an information recording apparatus for recording such information onto an information recording medium, an information recording medium on which such information has been recorded and a computer program for implementing the information processing apparatus.

### 2. Description of the Related Art

At the present time, information such as image and voice is recorded on information recording media, such as disks, as digital information, or widely circulated and spread via communication networks. Furthermore, owing to spread of personal computers, it has become possible to easily create copies of not only data, such as images and voices, but also information, such as computer programs and game programs. In addition, economical value of these kinds of information has increased, and the demand for strengthening the protection of property rights such as copyrights concerning these kinds of information has become greater.

Under such situations, various techniques for encrypting information have been developed in order to prevent illegal copy of the information. Furthermore, a technique for adding authentication information indicating that information is genuine to the information and restraining reproduction or execution of illegally copied information on the basis of the authentication information.

For example, as a technique for preventing illegal copy of contents of movies or music, the CSS (content scramble system) and the CPPM (content protection for prerecorded media) are spread. As for the CSS, see, for example, Makoto Tatebayashi and three persons, "DVD Content Scramble System," Technical report of Institute of video information media, May 22, 1997, Vol. 21, No. 31, pp. 15-19.

As a technique for preventing illegal copy of contents of a computer program or a game program, a technique of marking authentication information on an information recording medium such as a ROM disk having the information recorded thereon is spread. For example, a mark having individuality, such as a logo or a bar code, is provided in an innermost area of a ROM disk having a computer program or a game program recorded thereon. The marked area is an area located on a further inner side than the ordinary information recording area (i.e., a non-recording area in an ordinary use form of the disk). In an ordinary reproduction apparatus, therefore, the pickup cannot be moved to the area, and the area cannot be accessed. Therefore, a special function of moving the pickup to the innermost area and making it possible to access the area is added to the reproduction apparatus. Further when conducting reproduction on the ROM disk, the innermost area is accessed by the reproduction apparatus. When the mark cannot be detected correctly, reproduction on the ROM disk is not performed. According to such a technique, a mark is not present in an innermost area of a disk having an illegally copied computer program or the like recorded thereon. Therefore, it is possible to prevent reproduction on such a disk. As a result, illegal copy can be restrained.

In the encryption technique such as the CSS and the CPPM, however, information processing or arithmetic operation processing is conducted on information to be protected according to a predetermined algorithm by using predetermined keys. If the keys and the algorithm are known, therefore, the encryption can be unraveled. Of course, the key and the algorithm are managed secretly by a producer or a provider of the information or the disk or the copyright protection association, and common persons cannot know the keys and the algorithm. Even if information concerning the keys and the algorithm leaks, a plurality of keys are needed to unravel the encryption. Furthermore, since the algorithm is also complicated, it is extremely difficult to unravel the encryption. Since these encryption techniques basically depend upon only the information processing or arithmetic operation processing and they do not depend upon a physical and tangible structure, however, there is a risk that the encryption will be unraveled by an engineer having advanced information processing.

On the other hand, the technique of marking authentication information on the innermost area on a ROM disk depends on a physical and tangible structure, such as use of a mark, and addition of a function of moving the pickup to a special innermost area to the reproduction apparatus. If attention is paid to such points, therefore, it is also considered that information protection can be enhanced. However, a function of detecting a mark present in the innermost area of the disk (hereafter referred to as "mark detection function") is an ancillary function added to the reproduction apparatus, and it is an independent function separated from an ordinary information reproduction function of the reproduction apparatus. Therefore, there is a risk that the mark detection function will be removed by modifying a part of the reproduction apparatus.

Furthermore, in the method of marking special information in a special area, such as the innermost area, on the ROM disk, a special function (such as the function of moving the pickup to the special area) must be added to the reproduction apparatus. In addition, for making a mark on the ROM disk, a dedicated disk manufacturing apparatus becomes necessary. As a result, the manufacture cost of the reproduction apparatus and the disk is increased.

### SUMMARY OF THE INVENTION

In view of the problems exemplified above, the present invention has been made. A first object of the present invention is to provide an information processing apparatus, an information recording apparatus, an information recording medium, a computer program and an information processing method capable of strengthening protection of information against illegal copy or the like.

A second object of the present invention is to provide an information processing apparatus, an information recording apparatus, an information recording medium, a computer program and an information processing method capable of implementing protection of information against illegal copy or the like at lower cost.

The present invention will be described below. Although reference numerals in the accompanying drawings will be accessorily written as parenthetic numerals for descriptive convenience, the present invention is not limited to the illustrated features.

The above object of the present invention can be achieved by an information processing apparatus (10) for reproducing or executing information, provided with: an acquisition unit (11) for acquiring the information; a processing unit (12) for conducting reproduction processing or execution processing on information acquired by the acquisition unit (11); an encryption decision unit (13) for making a decision whether information encrypted by using a predetermined encryption method is contained in the information acquired by the acquisition unit (11); and a first control unit (14) responsive to a fact that information encrypted by using the predetermined encryption method is not contained in the information acquired by the acquisition unit (11), found as a result of the decision made by the encryption decision unit (13), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

The above object of the present invention can be achieved by a game apparatus comprising the above-mentioned information processing apparatus.

The above object of the present invention can be achieved by an information recording apparatus (60) for recording contents information and authentication information for indicating that the contents information is genuine on an information recording medium, the information recording apparatus (60) provided with: an address acquisition unit (61) for acquiring an address on the information recording medium on which the contents information should be recorded; an address setting unit (62) for conducting a predetermined arithmetic operation by using the address of the contents information acquired by the address acquisition unit (61), and for setting a value obtained by the arithmetic operation as an address of the authentication information on the information recording medium; an encryption unit (63) for encrypting the authentication information by using a predetermined encryption method; and a recording unit (64) for recording the contents information at the address acquired by the address acquisition unit (61) and recording the authentication encrypted by the encryption unit (63) at the address set by the address setting unit (62).

The above object of the present invention can be achieved by an information recording apparatus (70) for recording contents information and authentication information for indicating that the contents information is genuine on a multilayer information recording medium, the information recording apparatus (70) provided with: a first recording unit (71) for recording the contents information on some layers of the multilayer information recording medium; an encryption unit (72) for encrypting the authentication information by using a predetermined encryption method; and a second recording unit (73) for recording the authentication information encrypted by the encryption unit (72) on one of layers in the multilayer information recording medium other than the layers on which the contents information is recorded.

The above object of the present invention can be achieved by a computer-readable information recording medium (80) having contents information (81) and authentication information (82) for indicating that the contents information (81) is genuine recorded thereon, wherein the authentication information (82) is recorded in such a state that it has been encrypted by using a predetermined encryption method, and a value obtained by conducting a predetermined arithmetic operation using a recording address of the contents information (81) is set as a recording address of the authentication information (82).

The above object of the present invention can be achieved by a computer-readable multilayer information recording medium (90) having contents information (91) and authentication information (92) for indicating that the contents information (91) is genuine, recorded thereon, wherein the contents information (91) is recorded on some layers of the multilayer information recording medium (90), and the authentication information (92) is encrypted by using a predetermined encryption method and recorded in the encrypted form on one of layers in the multilayer information recording medium other than the layers on which the contents information (91) is recorded.

The above object of the present invention can be achieved by a computer program for causing a computer to function as the information processing apparatus according to any one of claims 1 to 16.

The above object of the present invention can be achieved by an information processing method for reproducing or executing information, provided with: an acquisition process for acquiring the information; an encryption decision process for making a decision whether information encrypted by using a predetermined encryption method is contained in the information acquired in the acquisition process; a control process responsive to a fact that information encrypted by using the predetermined encryption method is not contained in the information acquired in the acquisition process, found as a result of the decision made in the encryption decision process, for issuing a control order to prevent the acquisition process from further acquiring at least a part of the information, or for issuing a control order to prevent at least a part of the information acquired in the acquisition process from being subjected to execution processing and reproduction processing or to prevent the reproduced or executed information from being output; and a processing process for conducting reproduction processing or execution processing on the information acquired in the acquisition process, and thereby outputting the reproduced or executed information, wherein, when the control order has been issued in the control process, further acquisition of at least a part of the information is not conducted in the acquisition process, or the execution processing, the reproduction processing, or outputting of reproduced or executed information is not conducted in the processing process.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a first embodiment of an information processing apparatus according to the present invention;
FIG. 2 is a block diagram showing a second embodiment of an information processing apparatus according to the present invention;
FIG. 3 is a block diagram showing a third embodiment of an information processing apparatus according to the present invention;
FIG. 4 is a block diagram showing a fourth embodiment of an information processing apparatus according to the present invention;
FIG. 5 is a block diagram showing a fifth embodiment of an information processing apparatus according to the present invention;
FIG. 6 is a block diagram showing a first embodiment of an information recording apparatus according to the present invention;
FIG. 7 is a block diagram showing a second embodiment of an information recording apparatus according to the present invention;
FIG. 8 is a block diagram showing a first embodiment of an information recording medium according to the present invention;
FIG. 9 is a block diagram showing a second embodiment of an information recording medium according to the present invention;
FIG. 10 is a block diagram showing a game apparatus according to an embodiment of the present invention;
FIG. 11 is an explanatory diagram showing a DVD-ROM according to an embodiment of the present invention; and
FIG. 12 is a flow chart showing execution permission/prohibition decision processing according to an embodiment of the present invention.

### DESCRIPTION OF THE PREFERRED EMBODIMENTS

Hereafter, embodiments of the present invention will be described with reference to the drawings.

### (First Embodiment of Information Processing Apparatus)

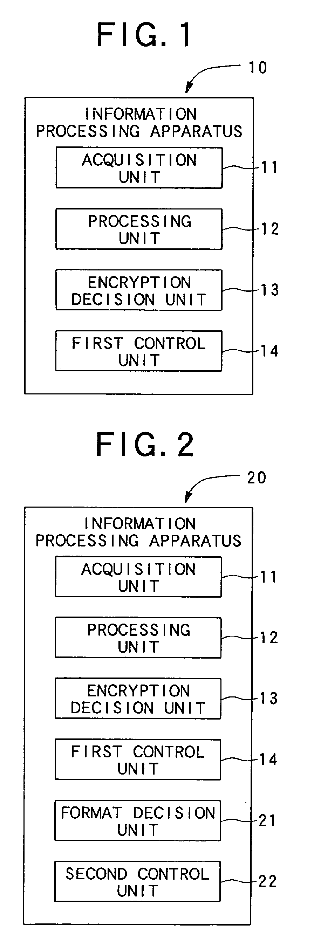

A first embodiment of an information processing apparatus according to the present invention (hereafter referred to as "first information processing apparatus) will now be described with reference to FIG. 1. FIG. 1 shows a configuration of the first information processing apparatus. FIG. 1 embodies components according to the embodiment of the present invention as long as its technical thought is explained. Shapes, positions and connection relations are not restricted thereto. This also holds true of FIGs. 2 to 9 hereafter referred to embodiments of the present invention.

A first information processing apparatus 10 shown in FIG. 1 is an apparatus for reproducing or executing information. The first information processing apparatus 10 can be applied to, for example, home game apparatuses, simulation apparatuses, image reproduction apparatuses, and voice reproduction apparatuses. Furthermore, it is also possible to implement the first information processing apparatus 10 by using a general-purpose computer. Information to be reproduced or executed by the first information processing apparatus 10 is a computer program, a game program, a simulation program, image information, or voice information, and it is not especially limited.

The first information processing apparatus 10 includes an acquisition unit 11 for acquiring the information, a processing unit 12 for conducting reproduction processing or execution processing on the information acquired by the acquisition unit 11, an encryption decision unit 13 for making a decision whether information encrypted by using a predetermined encryption method is contained in the information acquired by the acquisition unit 11, and a first control unit 14 responsive to a fact that information encrypted by using the predetermined encryption method is not contained in the information acquired by the acquisition unit 11, found as a result of the decision made by the encryption decision unit 13, for controlling the acquisition unit 11 so as to prevent the acquisition unit 11 from further acquiring at least a part of the information, or for controlling the processing unit 12 so as to prevent at least a part of the information acquired by the acquisition unit 11 from being reproduced, executed, or finally output.

In the case where information is acquired from an information recording medium such as a disk, the acquisition unit 11 is typically a disk drive or the like. For example, in the case where the information recording medium is a DVD-ROM, the acquisition unit 11 is a DVD-ROM drive. On the other hand, in the case where information is acquired from a communication network or the like, the acquisition unit 11 is, for example, a network interface or the like. In this way, the acquisition unit 11 can be selected suitably according to the information acquisition method or the like, and it is not especially limited.

In the case where execution processing is conducted on a computer program, the processing unit 12 is a processing unit having an arithmetic function and a storage function. In the case where reproduction processing is conducted on image information or voice information, the processing unit 12 is a processing unit or a decode module having a decode function. For example, in the case where information to be reproduced is image information subjected to MPEG compression, the processing unit 12 is an MPEG decode module. These units and modules can also be implemented as dedicated circuits, but can also be implemented by making a general-purpose CPU (central processing unit) execute software. In this way, the processing unit 12 can be selected suitably according to the nature and kind of information, and convenience in design and manufacture, and it is not especially limited.

The encryption decision unit 13 is a unit for determining whether information encrypted by using a predetermined encryption method is contained in information acquired by the acquisition unit 11. The encryption decision unit 13 can be formed of, for example, a CPU or another processing unit having an arithmetic operation and a storage function. As for the decision whether information encrypted by using a predetermined encryption method is contained in the information acquired by the acquisition unit 11, a method of checking a name (especially extension) attached to the information, a method of checking a flag in file system information of an information recording medium having information recorded thereon, and a method of checking the nature of the encrypted information itself are conceivable. Any method may be adopted.

When information encrypted by using a predetermined encryption method is not contained in the information acquired by the acquisition unit 11 as a result of the decision conducted by the encryption decision unit 13, the first control unit 14 controls the acquisition unit 11 so as to prevent the acquisition unit 11 from further acquiring at least a part of the information, or the first control unit 14 controls the processing unit 12 so as not to reproduce, execute or finally output at least a part of information acquired by the acquisition unit 11. For example, in the case where information to be executed by the first information processing apparatus 10 is a game program, the first control unit 14 controls the acquisition unit 11 so as to prevent further acquisition of at least a part of the game program, or controls the processing unit 12 so as not to execute or finally output at least a part of the game program acquired by the acquisition unit 11. In the case where information to be reproduced by the first information processing apparatus 10 is image information or voice information such as a movie or music, the first control unit 14 controls the acquisition unit 11 so as to prevent further acquisition of at least a part of the image information or voice information, or controls the processing unit 12 so as not to execute or finally output at least a part of the image information or voice information acquired by the acquisition unit 11. For example, the first control unit 14 may have such a configuration as to send an order to the effect that further acquisition of information should be suspended, to the acquisition unit 11 when information encrypted by using a predetermined encryption method is not contained in the information acquired by the acquisition unit 11. Furthermore, the first control unit 14 may have such a configuration as to send an order to the effect that reproduction processing or execution processing for at least a part of information should be suspended or not started, to the processing unit 12. In addition, the first control unit 14 may have such a configuration as to send an order to the effect that outputting after reproduction processing or execution processing should be suspended, to the processing unit 12.

Such a configuration that all of the information to be reproduced or executed is not executed, reproduced or output on the basis of such an order may be adopted. Such a configuration that only information that is included in the information and that is subject to copy restraint or that is to be protected is not acquired, executed, reproduced or output may also be adopted. As the predetermined encryption method, for example, the CSS method or the CPPM method can be used, but the predetermined method is not limited to them. The first control unit 14 having such a configuration can be formed of, for example, a CPU or a different processing unit having an arithmetic operation and a storage function.

The first information processing apparatus 10 having such a configuration operates as heretofore described. When producing or providing information, a person having legal authority to produce or provide information adds authentication information encrypted by using a predetermined encryption method, to contents information such as a computer program, a game program, movie data, or music data. Instead of adding authentication information encrypted by using a predetermined encryption method to contents information, the contents information itself may be encrypted by using a predetermined encryption method. When the acquisition unit 11 in the first information processing apparatus 10 acquires information and the information contains authentication information encrypted by using a predetermined encryption method or contents information encrypted by using a predetermined encryption method, the processing unit 12 conducts reproduction processing or execution processing mainly on the contents information. It is also possible to adopt such a configuration that the acquisition unit 11 continues information acquisition or the processing unit 12 conducts reproduction processing or execution processing only in the case where the information acquired by the acquisition unit 11 satisfies another condition or several other conditions.

On the other hand, if information encrypted by using a predetermined encryption method is not contained in the information acquired by the acquisition unit 11, then the encryption decision unit 13 makes a decision to that effect, and the first control unit 14 controls the acquisition unit 11 to prevent the acquisition unit 11 from further acquiring at least contents information, or controls the processing unit 12 to prevent the processing unit 12 from reproducing, executing or finally outputting at least the contents information. As a result, the acquisition unit 11 or the processing unit 12 operates according to control of the first control unit 14, thus at least the contents information is not reproduced, executed or output. Therefore, if authentication information encrypted by using a predetermined encryption method is not added and the contents information itself is not encrypted by using a predetermined encryption method either, therefore, the contents information is not executed, reproduced, or output by the first information processing apparatus 10.

In this way, when information acquired by the acquisition unit 11 does not contain information encrypted by using a predetermined encryption method, the first information processing apparatus 10 prevents further acquisition of at least a part of information or does not reproduce, execute or output at least a part of information. Owing to such a configuration, the protection of the information against illegal copy can be strengthened. In other words, when producing or providing information, a person having legal authority to produce or provide information adds authentication information encrypted by using a predetermined encryption method to contents information, or encrypts the contents information itself by using a predetermined encryption method. As a result, genuine information to be circulated always contains information encrypted by the predetermined encryption method. For example, it is now supposed that a person having got an original disk, on which a game program (where the game program itself is not encrypted) with authentication information encrypted by using a predetermined encryption method added thereto is recorded, attempts to produce a copy disk of the game program. In this case, this person might extract only the game program from the original disk and copy the game program to a blank disk. Even if such a copy disk is produced, however, the game program recorded on the copy disk cannot be executed in the first information processing apparatus 10 (or finally output to the outside). Because information encrypted by using a predetermined encryption method is not present in the information recorded on the copy disk.

On the other hand, it is now supposed that a person having got an original disk, on which only movie data encrypted by using a predetermined encryption method is recorded, attempts to produce a copy disk of the movie data. Since typically it is desired that movie data is copied in such a state that the movie data can be looked at, this person in this case attempts to unravel the encryption of the movie data, and copy the movie data with the encryption unraveled. Even if such an illegal copy can be implemented, however, the copied movie data cannot be reproduced (or finally output to the outside) by the first information processing apparatus 10. Because the copied movie data is no longer encrypted by using the predetermined encryption method.

Furthermore, it can be considered that a person who attempts to conduct illegal copy unravels the encryption of the information, thereafter further encrypts the information by using the predetermined encryption method, and copy the information encrypted again. Even if the encryption of the information can be unraveled, however, it is more difficult to encrypt the information again by using the predetermined encryption method than to unravel the encryption. For example, in the case where the predetermined encryption method is the CSS method, multiple encryption using three keys, i.e., a title key, a disk key and a master key is conducted. For reproducing the encryption, therefore, all of information of three keys must be known. Even if all of information of the three keys is known, it is almost impossible to reproduce the encryption for the following reason. For example, in the case where information encrypted by using the CSS method is recorded on a commercially available blank DVD-R, the disk key is encrypted by using the master key, and then it is written in a lead-in area of the DVD-R. Since the key information for the blank disk is previously recorded in the lead-in area of the commercially blank DVD-R, however, new key information cannot be written in that place. Even if all of information of the three keys can be known, therefore, it is practically impossible to reproduce the encryption when seen from the physical and tangible aspect. Since thus the copy of the information encrypted by using the predetermined encryption method cannot be produced, a copy of information that can be reproduced, executed or output cannot be produced in the first information processing apparatus 10.

A person who attempts to conduct illegal copy might attempt to produce a copy disk by transferring information encrypted by using the predetermined encryption method and recorded on a disk, to another disk, sector by sector as it is. For example, in the case where the predetermined encryption method is the CSS method, key information is already written in the lead-in area of the original disk, and consequently it is practically impossible to produce a copy disk by using such a method. Because the lead-in area is an area that cannot be accessed arbitrarily by an ordinary person, and even if the key information is read from the lead-in area by using a special reading apparatus, it cannot be transferred to the lead-in area on the blank DVD-R as described above. Since thus the copy of the information encrypted by using the predetermined encryption method cannot be produced, a copy of information that can be reproduced, executed or output cannot be produced in the first information processing apparatus 10.

As heretofore described, it is practically impossible to produce a copy of information that can be reproduced, executed or output in the first information processing apparatus 10. As a result, protection of information against illegal copy can be strengthened.

In addition, when information encrypted by using the predetermined encryption method is not contained in information acquired by the acquisition unit 11, the first information processing apparatus 10 has a configuration in which further acquisition of at least a part of the information is prevented and at least a part of the information is not reproduced, executed or output. Therefore, protection of the information against illegal copy can be implemented at lower cost. In other words, for encrypting information by using the predetermined encryption method, a dedicated machine tool is not necessary and it suffices to prepare software for encrypting information by using the predetermined encryption method. Therefore, protection of information against illegal copy can be implemented at lower cost.

In the case where authentication information encrypted by using a predetermined encryption method is added to contents information, the authentication information may be anything as long as it can indicate that the contents information is genuine. If the authentication information is formed of information containing the image or voice, the authentication information can be encrypted by using an encryption method for image or voice, and consequently it is convenient. For example, in this case, a widespread encryption method, such as the CSS method or the CPPM method, can be used as an encryption method for encrypting the authentication information, and protection of contents information can be implemented at lower cost.

Furthermore, the authentication information may contain image information representing a logo of an information producer or a disk producer. In this case, if the logo contained in the authentication information is displayed when reproducing or executing contents information with the authentication information added, namely, if such a mode as to use the logo as a trademark or the like is implemented, then means for calling an organization that is conducting illegal copy as business to legal account increase and protection of contents information can be strengthened.

### (Second Embodiment of Information Processing Apparatus)

A second embodiment (hereafter referred to as "second information processing apparatus" ) of an information processing apparatus according to the present invention will now be described with reference to FIG. 2. FIG. 2 shows a configuration of the second information processing apparatus.

As shown in FIG. 2, the second information processing apparatus 20 includes an acquisition unit 11, a processing unit 12, an encryption decision unit 13 and a first control unit 14 in the same way as the first information processing apparatus 10. In addition, the second information processing apparatus 20 includes a format decision unit 21 and a second control unit 22. The format decision unit 21 determines whether information having a predetermined format is contained in information acquired by the acquisition unit 11. When information having the above-described predetermined format is not contained in the information acquired by the acquisition unit 11 as a result of the decision conducted by the format decision unit 21, the second control unit 22 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11.

The format decision unit 21 is a unit for determining whether information having a predetermined format is contained in the information acquired by the acquisition unit 11. The format decision unit 21 can be formed of, for example, a processing unit such as a CPU. The decision whether information having a predetermined format is contained in the information acquired by the acquisition unit 11 may be conducted by checking, for example, a name (especially an extension) added to the information, checking the property of the information format, or checking a table in file system information on an information recording medium having information recorded thereon.

When the information acquired by the acquisition unit 11 does not have the predetermined format as a result of the decision conducted by the format decision unit 21, the second control unit 22 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11. The second control unit 22 can be formed of, for example, a processing unit such as a CPU. For example, when the information acquired by the acquisition unit 11 does not have the predetermined format, the second control unit 22 may send an order for suspending further acquisition of at least a part of information, to the acquisition unit 11, or the second control unit 22 may send an order for suspending reproduction processing or execution processing on at least a part of information or preventing the reproduction processing or execution processing on at least a part of information from being started, to the processing unit 12. In addition, the second control unit 22 may send an order for suspending output after the reproduction processing or execution processing with respect to at least a part of information, to the processing unit 12.

For example, in the case where contents information or authentication information is mainly image information, a DVD video format is desirable as the predetermined format. In the case where contents information or authentication information is mainly voice information, a DVD audio format is desirable. Thus, the predetermined format can be suitably selected according to the kind or property of the contents information or the authentication information, and it is not especially restricted.

The second information processing apparatus 20 having such a configuration operates as heretofore described. When producing or providing information, a person having legal authority to produce or provide information adds authentication information having a predetermined format and encrypted by using a predetermined encryption method, to contents information. The contents information itself may be produced so as to have a predetermined format, and may be encrypted by using a predetermined encryption method. When the acquisition unit 11 in the second information processing apparatus 20 acquires information and the information contains authentication information having a predetermined format and encrypted by using a predetermined encryption method or contents information having a predetermined format and encrypted by using a predetermined encryption method, the processing unit 12 conducts reproduction processing or execution processing mainly on the contents information.

On the other hand, if authentication information having a predetermined format or contents information encrypted by using a predetermined encryption method is not contained in the information acquired by the acquisition unit 11, then the format decision unit 21 makes a decision to that effect, and the second control unit 22 controls the acquisition unit 11 to prevent the acquisition unit 11 from further acquiring at least contents information, or controls the processing unit 12 to prevent the processing unit 12 from reproducing, executing or finally outputting at least the contents information. As a result, the acquisition unit 11 or the processing unit 12 operates according to control of the second control unit 22, thus at least the contents information is not reproduced, executed or output.

On the other hand, if authentication information encrypted by using a predetermined encryption method or contents information encrypted by using a predetermined encryption method is not contained in the information acquired by the acquisition unit 11, then the encryption decision unit 13 makes a decision to that effect, and the first control unit 14 controls the acquisition unit 11 to prevent the acquisition unit 11 from further acquiring at least contents information, or controls the processing unit 12 to prevent the processing unit 12 from reproducing, executing or finally outputting at least the contents information. As a result, the acquisition unit 11 or the processing unit 12 operates according to control of the first control unit 14, thus at least the contents information is not reproduced, executed or output.

Therefore, if information having a predetermined format and encrypted by using a predetermined encryption method is not contained in the information acquired by the acquisition unit 11, then the contents information is not executed, reproduced, or output at least.

Thus, according to the second information processing apparatus 20 as well, protection of information against illegal copy can be strengthened, and protection of information can be implemented at lower cost. Especially according to the second information processing apparatus 20, protection of information against illegal copy can be further strengthened by setting a double condition that if information having a predetermined format and encrypted by using a predetermined encryption method does not exist, the information is not executed, reproduced or output.

### (Third Embodiment of Information Processing Apparatus)

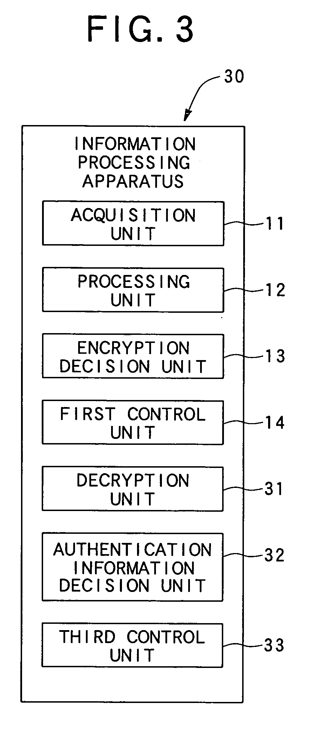

A third embodiment (hereafter referred to as "third information processing apparatus") of an information processing apparatus according to the present invention will now be described with reference to FIG. 3. FIG. 3 shows a configuration of the third information processing apparatus.

As shown in FIG. 3, the third information processing apparatus 30 includes an acquisition unit 11, a processing unit 12, an encryption decision unit 13 and a first control unit 14 in the same way as the first information processing apparatus 10. In addition, the third information processing apparatus 30 includes a decryption unit 31, an authentication information decision unit 32, and a third control unit 33. When information encrypted by using a predetermined encryption method is not contained in the information acquired by the acquisition unit 11, the decryption unit 31 decrypts the information encrypted by using a predetermined encryption method. The authentication information decision unit 32 makes a decision whether the information decrypted by the decryption unit 31 is authentication information. When the information decrypted by the decryption unit 31 is not authentication information as a result of the decision conducted by the authentication information decision unit 32, the third control unit 33 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11.

The decryption unit 31 includes a decryption module or the like having a predetermined decryption algorithm corresponding to a predetermined encryption method. This can be formed of a processing unit or the like having an arithmetic operation function and a storage function.

The authentication information decision unit 32 is a unit for determining whether information decrypted by the decryption unit 31 is authentication information. This can be formed of a processing unit having an arithmetic operation function and a storage function. The decision whether the decrypted information is authentication information can be conducted by, for example, making the third information processing apparatus 30 previously store reference information indicating a feature, a data size, contents, a recording location or a relative address of the authentication information, and comparing the decrypted information with the reference information at the time of decision. The following configuration would be possible. First, to check whether a checksum of the decrypted information is a predetermined value. Next, it is determined whether the decrypted information is authentication information on the basis of the result of checking.

When the decrypted information is not authentication information as a result of the decision conducted by the authentication information decision unit 32, the third control unit 33 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11. The third control unit 33 can also be formed of, for example, a processing unit having an arithmetic operation function and a storage function. For example, when the decrypted information is not authentication information, the third control unit 33 may send an order for suspending further acquisition of at least a part of information, to the acquisition unit 11, or the third control unit 33 may send an order for preventing the reproduction or execution on at least a part of information to the processing unit 12. In addition, the third control unit 33 may send an order for suspending output after the reproduction processing or execution processing, to the processing unit 12.

The third information processing apparatus 30 having such a configuration operates as heretofore described. When producing or providing information, a person having legal authority to produce or provide information adds authentication information having a predetermined feature, content or data size and encrypted by using a predetermined encryption method, to contents information. When the acquisition unit 11 in the third information processing apparatus 30 acquires information and the information contains information encrypted by using a predetermined encryption method and the information is authentication information having a predetermined feature, content or data size as a result of decrypting the information, the processing unit 12 conducts reproduction processing or execution processing mainly on the contents information.

On the other hand, although information encrypted by using a predetermined encryption is contained in the information acquired by the acquisition unit 11, if the information obtained by decrypting the encrypted information is not authentication information having a predetermined feature, content or data size, then the authentication information decision unit 32 makes a decision to that effect, and the third control unit 33 controls the acquisition unit 11 to prevent the acquisition unit 11 from further acquiring at least contents information, or controls the processing unit 12 to prevent the processing unit 12 from reproducing, executing or finally outputting at least the contents information. As a result, the acquisition unit 11 or the processing unit 12 operates according to control of the third control unit 33, thus at least the contents information is not reproduced, executed or output.

On the other hand, if information encrypted by using a predetermined encryption method is not contained in the information acquired by the acquisition unit 11, then the encryption decision unit 13 makes a decision to that effect, and the first control unit 14 controls the acquisition unit 11 to prevent the acquisition unit 11 from further acquiring at least contents information, or controls the processing unit 12 to prevent the processing unit 12 from reproducing, executing or finally outputting at least the contents information. As a result, the acquisition unit 11 or the processing unit 12 operates according to control of the first control unit 14, thus at least the contents information is not reproduced, executed or output.

Therefore, if authentication information encrypted by using a predetermined encryption method and having a predetermined feature, content or data size is not contained in the information acquired by the acquisition unit 11, then the contents information is not executed, reproduced, or output at least.

Thus, according to the third information processing apparatus 30 as well, protection of information against illegal copy can be strengthened, and protection of information can be implemented at lower cost. Especially according to the third information processing apparatus 30, protection of information against illegal copy can be further strengthened by setting a double condition that if authentication information encrypted by using a predetermined encryption method and having a predetermined feature, content or data size does not exist, the information is not executed, reproduced or output.

### (Fourth Embodiment of Information Processing Apparatus)

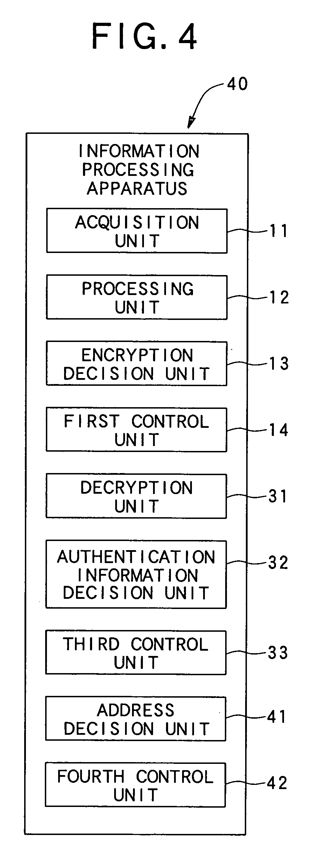

A fourth embodiment (hereafter referred to as "fourth information processing apparatus") of an information processing apparatus according to the present invention will now be described with reference to FIG. 4. FIG. 4 shows a configuration of the fourth information processing apparatus.

As shown in FIG. 4, the fourth information processing apparatus 40 includes an acquisition unit 11, a processing unit 12, an encryption decision unit 13 and a first control unit 14 in the same way as the first information processing apparatus 10. Further, the fourth information processing apparatus 40 includes a decryption unit 31, an authentication information decision unit 32, and a third control unit 33 in the same way as the third information processing apparatus 30. In addition, the fourth information processing apparatus 40 includes an address decision unit 41 and a fourth control unit 42. When the information decrypted by the decryption unit 31 is authentication information, the address decision unit 41 makes a decision whether the authentication information has already been recorded at a predetermined address on an information recording medium. When the authentication information has not been recorded at a predetermined address as a result of the decision conducted by the address decision unit 41, the fourth control unit 42 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11.

The address decision conducted by the address decision unit 41 can be implemented by using, for example, a method of making the fourth information processing apparatus 40 previously store reference information indicating a predetermined address at which the authentication information should be recorded, and comparing the reference information with the actually detected address of the authentication information, at the time of decision.

The fourth information processing apparatus 40 having such a configuration operates as heretofore described. When producing or providing information, a person having legal authority to produce or provide information adds authentication information having a predetermined feature, content or data size and encrypted by using a predetermined encryption method, to contents information. In addition, when recording the contents information and the authentication information on an information recording medium, the authentication information is recorded on a predetermined address of an information recording medium. When the acquisition unit 11 in the fourth information processing apparatus 40 acquires information and the information contains information encrypted by using a predetermined encryption method, the information is authentication information having a predetermined feature, content or data size as a result of decrypting the information, and the authentication information is recorded on a predetermined address of an information recording medium, the processing unit 12 conducts reproduction processing or execution processing mainly on the contents information.

On the other hand, (i) if information encrypted by using a predetermined encryption method is not contained in information acquired by the acquisition unit 11, (ii) if information obtained by decryption is not authentication information having a predetermined feature, content or data size, although information encrypted by using a predetermined encryption method is contained in the information acquired by the acquisition unit 11, or (iii) if authentication information is not recorded at a predetermined address on an information recording medium, then the encryption decision unit 13, the authentication information decision unit 32 or the address decision unit 41 judges the fact of (i), (ii) or (iii), and the first control unit 14, the third control unit 33 or the fourth control unit 42 controls the acquisition unit 11 so as to prevent further acquisition of at least contents information, or controls the processing unit 12 so as not to reproduce, execute or output at least contents information. As a result, the acquisition unit 11 or the processing unit 12 operates under the control of the first control unit 14, the third control unit 33 or the fourth control unit 42, and consequently at least the contents information is not reproduced, executed or output. If authentication information encrypted by using a predetermined encryption method, having a predetermined feature, content or data size, and recorded at a predetermined address on an information recording medium is not contained in information acquired by the acquisition unit 11, therefore, at least the contents information is not reproduced, executed or output.

Thus, according to the fourth information processing apparatus 40 as well, protection of information against illegal copy can be strengthened, and protection of information can be implemented at lower cost. Especially according to the fourth information processing apparatus 40, protection of information against illegal copy can be further strengthened by setting a triple condition that if authentication information encrypted by using a predetermined encryption method, having a predetermined feature, content or data size does not exist, and the authentication information has not been recorded at a predetermined address on an information recording medium, then the information is not executed, reproduced or output.

The address decision unit 41 in the fourth information processing apparatus 40 may be configured as heretofore described. That is, in the case where an information recording medium has contents information and authentication information recorded thereon, a value obtained by conducting a predetermined arithmetic operation by using an address of the contents information on the information recording medium is set as an address of authentication information on the information recording medium. On such assumption, the address decision unit 41 is provided with a configuration including an arithmetic operation unit and a comparison unit. The arithmetic operation executes the above-described arithmetic operation by using the address of the contents information on the information recording medium. The comparison unit compares the value of the address of the authentication information on the information recording medium with the value obtained by the arithmetic operation conducted in the arithmetic operation unit to determine whether they coincide with each other.

It is desirable to form contents of a predetermined arithmetic operation so that the arithmetic operation result will always differ if contents information differs. With regard to the fact that a storage area of authentication information does not overlap a storage area of contents information and the storage area of the authentication information is contained in a storage area on an information storage medium, contents of the predetermined arithmetic operation are determined. For example, a value obtained by dividing the size of the contents information by a constant value and adding a resultant value to a recording end address of the contents information may be set as a recording start address of the authentication information.

According to such a configuration, the address of the authentication information is determined on the basis of the address of the contents information. Therefore, it is extremely difficult for a person who does not know the predetermined arithmetic operation method to know the address of the authentication information. Furthermore, since the address of the authentication information varies if the contents information varies, it becomes more difficult to know the address of the authentication information. Therefore, protection of the information against illegal copy can be strengthened.

### (Fifth Embodiment of Information Processing Apparatus)

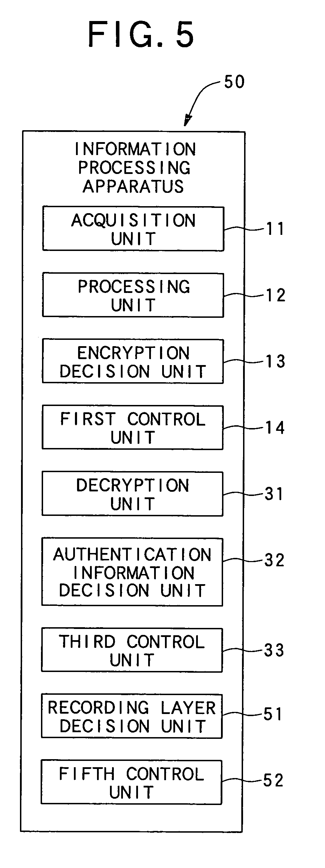

A fifth embodiment (hereafter referred to as "fifth information processing apparatus") of an information processing apparatus according to the present invention will now be described with reference to FIG. 5. FIG. 5 shows a configuration of the fifth information processing apparatus.

As shown in FIG. 5, the fifth information processing apparatus 50 includes an acquisition unit 11, a processing unit 12, an encryption decision unit 13 and a first control unit 14 in the same way as the first information processing apparatus 10. Further, the fifth information processing apparatus 50 includes a decryption unit 31, an authentication information decision unit 32, and a third control unit 33 in the same way as the third information processing apparatus 30. In addition, the fifth information processing apparatus 50 includes a recording layer decision unit 51 and a fifth control unit 52. When the information decrypted by the decryption unit 31 is authentication information, the recording layer decision unit 51 makes a decision whether the authentication information has already been recorded at a predetermined layer of a multilayer information recording medium. When the authentication information has not been recorded at a predetermined address as a result of the decision conducted by the recording layer decision unit 51, the fifth control unit 52 controls the acquisition unit 11 so as to prevent the acquisition unit 11 from further acquiring at least a part of the information, or controls the processing unit 12 so as not to reproduce, execute, or finally output at least a part of the information acquired by the acquisition unit 11.

The address decision conducted by the recording layer decision unit 51 can be implemented by using, for example, a method of making the fifth information processing apparatus 50 previously store reference information indicating a predetermined layer number at which the authentication information should be recorded, and comparing the reference information with the actually detected address of the authentication information, at the time of decision.

The fifth information processing apparatus 50 having such a configuration operates as heretofore described. When producing or providing information, a person having legal authority to produce or provide information adds authentication information having a predetermined feature, content or data size and encrypted by using a predetermined encryption method, to contents information. In addition, when recording the contents information and the authentication information on a multilayer information recording medium, the authentication information is recorded on a predetermined layer of a multilayer information recording medium. In this case, it is desirable to record the authentication information on a layer that is different from the layer on which the contents information is recorded. More preferably, the contents information is recorded on a first layer (a layer subject to typically first reproduction or a layer on which address 0 is set) and the authentication information is recorded on one of a second layer and subsequent layers. More preferably, the authentication information is recorded on an intermediate portion or a latter half portion of a recording area formed on a layer on which the authentication information should be recorded.

It is now supposed that the acquisition unit 11 in the fifth information processing apparatus 50 acquires information and the information contains information encrypted by using a predetermined encryption method. When the information obtained by decrypting the acquired information is authentication information having a predetermined feature, content or data size, and the authentication information is recorded on a predetermined layer of the multilayer information recording medium, the processing unit 12 conducts reproduction processing or execution processing mainly on the contents information.

On the other hand, (i) if information encrypted by using a predetermined encryption method is not contained in information acquired by the acquisition unit 11, (ii) if information obtained by decryption is not authentication information having a predetermined feature, content or data size, although information encrypted by using a predetermined encryption method is contained in the information acquired by the acquisition unit 11, or (iii) if authentication information is not recorded at a predetermined layer of a multilayer information recording medium, then the encryption decision unit 13, the authentication information decision unit 32 or the recording layer decision unit 51 judges the fact of (i), (ii) or (iii), and the first control unit 14, the third control unit 33 or the fifth control unit 52 controls the acquisition unit 11 so as to prevent further acquisition of at least contents information, or controls the processing unit 12 so as not to reproduce, execute or output at least contents information. As a result, the acquisition unit 11 or the processing unit 12 operates under the control of the first control unit 14, the third control unit 33 or the fourth control unit 42, and consequently at least the contents information is not reproduced, executed or output. If authentication information encrypted by using a predetermined encryption method, having a predetermined feature, content or data size, and recorded at a predetermined layer of a multilayer information recording medium is not contained in information acquired by the acquisition unit 11, therefore, at least the contents information is not reproduced, executed or output.

Thus, according to the fifth information processing apparatus 50 as well, protection of information against illegal copy can be strengthened, and protection of information can be implemented at lower cost. Especially according to the fifth information processing apparatus 50, protection of information against illegal copy can be further strengthened by setting a triple condition that if authentication information encrypted by using a predetermined encryption method, having a predetermined feature, content or data size does not exist, and the authentication information has not been recorded at a predetermined address on an information recording medium, then the information is not executed, reproduced or output.

In addition, if a person who attempts to illegally copy information is going to copy information recorded on the multilayer information recording medium to a single-layer information recording medium, then the person might be able to copy only the contents information recorded on one layer of the multilayer information recording medium to the single-layer information recording medium, but the person cannot copy the authentication information recorded on another layer. Because the information recording medium to be copied to has a single layer, and consequently there is no area to record the authentication information therein when the contents information has been recorded. If the data size of the contents information is small, there might be an area to record the authentication information therein. In this case, however, the recording layer and address of the authentication information also change as a result of copying. Therefore, at least the contents information is not executed or reproduced by the fifth information processing apparatus 50 or the fourth information processing apparatus 40.

If the contents information is recorded on a first layer of a multilayer information recording medium and the authentication information is recorded on one layer among a second layer and subsequent layers, then it is convenient in the inspection work at the time of manufacture. In other words, since the information recorded on the first layer of the multilayer information recording medium is typically reproduced first, the inspection work at the time of manufacture can be conducted rapidly.

Furthermore, if the authentication information is recorded on an intermediate portion or a latter half portion of an information recording area formed on a layer on which the authentication information should be recorded, it becomes possible to make it difficult for a person who attempts to conduct illegal copy to find the authentication information.

### (First Embodiment of Information Recording Apparatus)

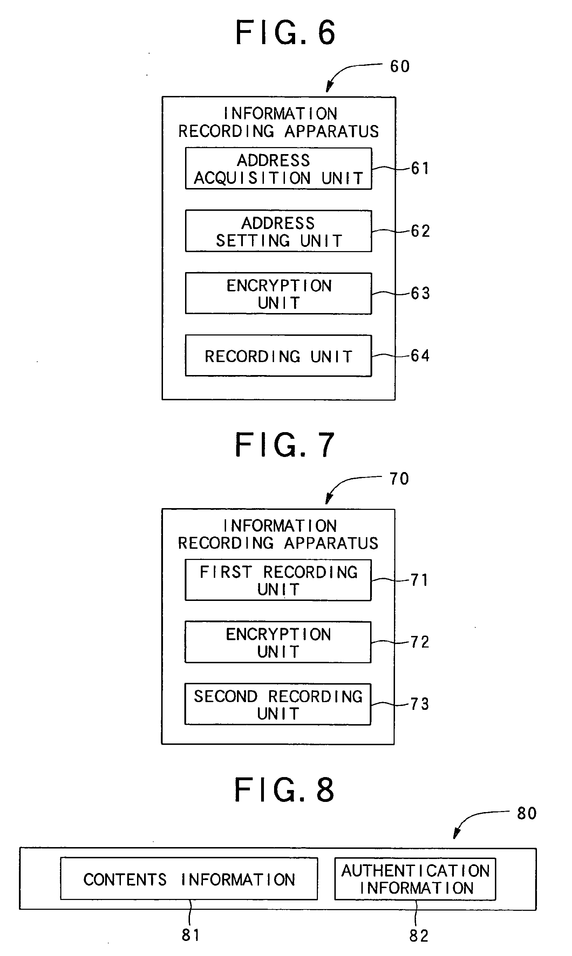

A first embodiment (hereafter referred to as "first information recording apparatus") of an information recording apparatus according to the present invention will now be described with reference to FIG. 6. FIG. 6 shows a configuration of the first information recording apparatus.

A first information recording apparatus 60 shown in FIG. 6 is an information recording apparatus suitable for a person having legal authority to produce or provide information, specifically for a manufacturer of an information recording medium to use when manufacturing an information recording medium having contents information and authentication information recorded thereon.

The first information recording apparatus 60 includes an address acquisition unit 61 for acquiring an address on the information recording medium on which the contents information should be recorded, an address setting unit 62 for conducting a predetermined arithmetic operation by using the address of the contents information acquired by the address acquisition unit 61, and for setting a value obtained by the arithmetic operation as an address of the authentication information on the information recording medium, an encryption unit 63 for encrypting the authentication information by using a predetermined encryption method, and a recording unit 64 for recording the contents information at the address acquired by the address acquisition unit 61 and recording the authentication encrypted by the encryption unit 63 at the address set by the address setting unit 62.

The address acquisition unit 61 acquires an address on an information recording medium at which contents information should be recorded. The acquisition method may be a method of manually inputting an address, or a method of finding an address from various kinds of information recorded on an information recording medium by using an arithmetic operation.

The address setting unit 62 conducts an predetermined arithmetic operation on the address of the contents information acquired by the address acquisition unit 61, and sets a value obtained by the arithmetic operation as an address of the authentication information on the information recording medium. It is desirable to form contents of the predetermined arithmetic operation so that the arithmetic operation result will always differ if the contents information differs. For example, it is also possible to divide the size of the contents information by a constant value, add a resultant value to the recording end address of the contents information, and sets a resultant value as a recording start address of the authentication information.

The encryption unit 63 encrypts the authentication information by using a predetermined encryption method. As the predetermined encryption method, for example, the CSS method or the CPPM method can be considered. However, the predetermined encryption method can be selected suitably according to the kind and property (such as image information or voice information) of the authentication information, and it is not especially limited.

The recording unit 64 records contents information and encrypted authentication information at respective recording addresses.

According to the first information recording apparatus 60 having such a configuration, the address of the authentication information is determined on the basis of the address of the contents information. Therefore, it is extremely difficult for a person who does not know the predetermined arithmetic operation method to know the address of the authentication information. Furthermore, if the contents information varies, then the address of the authentication information varies. Therefore, it becomes extremely difficult to know the address of the authentication information. Accordingly, protection of information against illegal copy can be strengthened by combining the first information recording apparatus with one of the above-described first to fifth information processing apparatuses (especially the fourth information processing apparatus).

Furthermore, if the recording address of the authentication information is set in an area having the contents information recorded therein, i.e., in an ordinary information recording area (not in an area that is located on the innermost side of a disk which can be accessed by only a reading apparatus or a recording apparatus with a dedicated function, but in an area that can be accessed by an ordinary reading apparatus or an ordinary recording apparatus), then strengthening of the protection of information against illegal copy can be implemented at lower cost. Because in this case a dedicated mechanism for accessing an area that cannot be accessed by an ordinary reading apparatus or an ordinary recording apparatus becomes unnecessary.

### (Second Embodiment of Information Recording Apparatus)

A second embodiment (hereafter referred to as "second information recording apparatus") of an information recording apparatus according to the present invention will now be described with reference to FIG. 7. FIG. 7 shows a configuration of the second information recording apparatus.

A second information recording apparatus 70 shown in FIG. 7 is an information recording apparatus suitable for a person having legal authority to produce or provide information, more specifically for an information recording medium manufacturer to use when manufacturing a multilayer information recording medium having contents information and authentication information recorded thereon.

The second information recording apparatus 70 includes a first recording unit 71 for recording the contents information on some layers of the multilayer information recording medium, an encryption unit 72 for encrypting the authentication information by using a predetermined encryption method, and a second recording unit 73 for recording the authentication information encrypted by the encryption unit 72 on one of layers in the multilayer information recording medium other than the layers on which the contents information is recorded.

According to the second information recording apparatus 70 having such a configuration, protection of information against illegal copy can be strengthened by combining the second information recording apparatus 70 with one of the above-described first to fifth information processing apparatuses (especially the fifth information processing apparatus). For example, if a person who attempts to illegally copy information is going to copy information recorded on the multilayer information recording medium to a single-layer information recording medium, then the person might be able to copy only the contents information recorded on one layer of the multilayer information recording medium to the single-layer information recording medium, but the person cannot copy the authentication information recorded on another layer. Because the information recording medium to be copied to has a single layer, and consequently there is no area to record the authentication information therein when the contents information has been recorded. If the data size of the contents information is small, there might be an area to record the authentication information therein. In this case, however, the recording layer and address of the authentication information also change as a result of copying. Therefore, at least the contents information is not executed or reproduced by the fourth information processing apparatus or the fifth information processing apparatus.

If the contents information is recorded on a first layer of the multilayer information recording medium and the authentication information is recorded on one layer among a second layer and subsequent layers of the multilayer information recording medium, then it is convenient in the inspection work at the time of manufacture. In other words, since the information recorded on the first layer of the multilayer information recording medium is typically reproduced first, the inspection work at the time of manufacture can be conducted rapidly.

If the authentication information is set in an ordinary information recording area (in an area that can be accessed by an ordinary reading apparatus or an ordinary recording apparatus for a multilayer information recording medium), then strengthening of information protection against illegal copy can be implemented at lower cost.

Furthermore, if the authentication information is recorded on an intermediate portion or a latter half portion of an information recording area formed on a layer on which the authentication information should be recorded, it becomes possible to make it difficult for a person who attempts to conduct illegal copy to find the authentication information.

### (First Embodiment of Information Recording Medium)

A first embodiment of an information recording medium (hereafter referred to as "first information recording medium") according to the present invention will now be described with reference to FIG. 8. FIG. 8 shows an information recording structure of the first information recording medium. As a location advances from the left side to the right side in FIG. 8, the recording address value on the first information recording medium increases. For example, in the case where the first information recording medium is a DVD, the left side in FIG. 8 is the inner circumference side of a disk and the right side is the outer circumference side.

As shown in FIG. 8, the first information recording medium 80 is a computer-readable information recording medium having contents information 81 and authentication information 82 for indicating that the contents information 81 is genuine recorded thereon. The authentication information 82 is recorded in such a state that it has been encrypted by using a predetermined encryption method, and a value obtained by conducting a predetermined arithmetic operation using a recording address of the contents information 81 is set as a recording address of the authentication information 82.

It is desirable to form the contents of the predetermined arithmetic operation so that the arithmetic operation result will nearly always differ if the contents information differs. For example, it is also possible to divide the size of the contents information 81 by a constant value, add a resultant value to a recording end address of the contents information 81, and set a resultant value in a recording start address of the authentication information 82.

According to the first information recording medium 80 having such an information recording structure, the address of the authentication information 82 is determined on the basis of the address of the contents information 81. Therefore, it is extremely difficult for a person who does not know the predetermined arithmetic operation method to know the address of the authentication information 82. Furthermore, if the contents information 81 varies, then the address of the authentication information 82 varies. Therefore, it becomes extremely difficult to know the address of the authentication information 82. Accordingly, protection of information against illegal copy can be strengthened by combining the first information recording medium with one of the above-described first to fifth information processing apparatuses (especially the fourth information processing apparatus).

Furthermore, if the recording address of the authentication information 82 is set in an area having the contents information 81 recorded therein, i.e., in an ordinary information recording area (not in an area that is located on the innermost side of a disk which can be accessed by only a reading apparatus or a recording apparatus with a dedicated function, but in an area that can be accessed by an ordinary reading apparatus or an ordinary recording apparatus), then strengthening of the protection of information against illegal copy can be implemented at lower cost. Because in this case a dedicated mechanism for accessing an area that cannot be accessed by an ordinary reading apparatus or an ordinary recording apparatus becomes unnecessary.

### (Second Embodiment of Information Recording Medium)

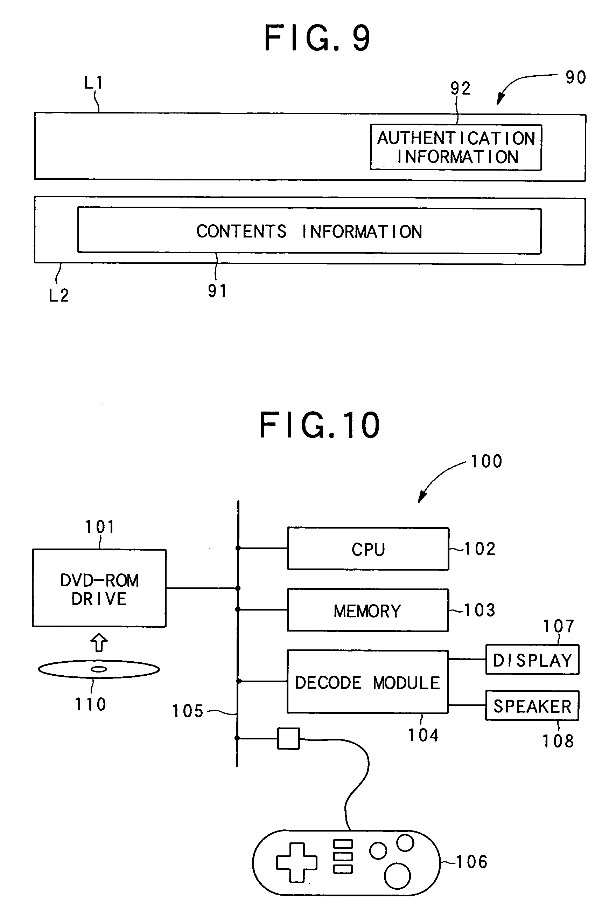

A second embodiment of an information recording medium (hereafter referred to as "second information recording medium") according to the present invention will now be described with reference to FIG. 9. FIG. 9 shows an information recording structure of the second information recording medium. As a concrete example of the second information recording medium 90, FIG. 9 shows a two-layer information recording medium having layers L1 and L2. However, the information recording medium may have three or more layers.

As shown in FIG. 9, the second information recording medium 90 is a computer-readable multilayer information recording medium having contents information 91 and authentication information 92 for indicating that the contents information 91 is genuine, recorded thereon. The contents information 91 is recorded on some layers of the second information recording medium 90, and the authentication information 92 is encrypted by using a predetermined encryption method and recorded in the encrypted form on one of layers in the multilayer information recording medium other than the layers on which the contents information 91 is recorded.

According to the second information recording medium 90 having such an information recording structure, protection of information against illegal copy can be strengthened by combining the second information recording medium 90 with one of the above-described first to fifth information processing apparatuses (especially the fifth information processing apparatus). For example, if a person who attempts to illegally copy information is going to copy information recorded on the second information recording medium 90 to a single-layer information recording medium, then the person might be able to copy only the contents information 91 recorded on one layer (L1) of the second information recording medium 90 to the single-layer information recording medium, but the person cannot copy the authentication information 92 recorded on another layer (L2). Because the information recording medium to be copied to has a single layer, and consequently there is no area to record the authentication information 92 therein when the contents information 91 has been recorded. If the data size of the contents information 91 is small, there might be an area to record the authentication information 92 therein. In this case, however, the recording layer and address of the authentication information 92 also change as a result of copying. Therefore, at least the contents information 91 is not executed or reproduced by the fourth information processing apparatus or the fifth information processing apparatus.

If the contents information 91 is recorded on a first layer of the second information recording medium 90 and the authentication information 92 is recorded on one layer among a second layer and subsequent layers of the second information recording medium 90, then it is convenient in the inspection work at the time of manufacture. In other words, since the information recorded on the first layer of the second information recording medium 90 is typically reproduced first, the inspection work at the time of manufacture can be conducted rapidly.

If the authentication information 92 is set in an ordinary information recording area (in an area that can be accessed by an ordinary reading apparatus or an ordinary recording apparatus for multilayer information recording medium), then strengthening of information protection against illegal copy can be implemented at lower cost.

Furthermore, if the authentication information 92 is recorded on an intermediate portion or a latter half portion of an information recording area formed on a layer on which the authentication information should be recorded, it becomes possible to make it difficult for a person who attempts to conduct illegal copy to find the authentication information 92.

### (An Embodiment of Information Processing Method)

An embodiment of an information processing method according to the present invention will now be described. The information processing method according to an embodiment of the present invention is an information processing method for reproducing or executing information, and includes an acquisition process, an encryption decision process, a control process, and a processing process. The acquisition process acquires the information, the encryption decision process for making a decision whether information encrypted by using a predetermined encryption method is contained in the information acquired in the acquisition process, the control process responsive to a fact that information encrypted by using the predetermined encryption method is not contained in the information acquired in the acquisition process, found as a result of the decision made in the encryption decision process, for issuing a control order to prevent the acquisition process from further acquiring at least a part of the information, or for issuing a control order to prevent at least a part of the information acquired in the acquisition process from being subjected to execution processing and reproduction processing or to prevent the reproduced or executed information from being output, and the processing process for conducting reproduction processing or execution processing on the information acquired in the acquisition process, and thereby outputting the reproduced or executed information. When the control order has been issued in the control process, further acquisition of at least a part of the information is not conducted in the acquisition process, or the execution processing, the reproduction processing, or outputting of reproduced or executed information is not conducted in the processing process.

Specifically, when producing or providing information, a person having legal authority to produce or provide information adds authentication information encrypted by using a predetermined encryption method, to contents information such as a computer program, a game program, movie data, or music data. Instead of adding authentication information encrypted by using a predetermined encryption method to contents information, the contents information itself may be encrypted by using a predetermined encryption method. When information is acquired in the acquisition process and the information contains authentication information encrypted by using a predetermined encryption method or contents information encrypted by using a predetermined encryption method, reproduction processing or execution processing is conducted mainly on the contents information in the processing process. It is also possible to conduct reproduction processing or execution processing in the processing process only in the case where the information acquired in the acquisition process satisfies another condition or several other conditions.

On the other hand, if information encrypted by using a predetermined encryption method is not contained in the information acquired in the acquisition process, then a decision to that effect is made in the encryption decision process, and a control order for preventing further acquisition of at least contents information, preventing execution processing or reproduction processing of at least the contents information, or preventing the reproduced or executed information from being output is issued in the control process. As a result, the processing of acquisition, reproduction and execution in the acquisition process or the processing process is prevented, suspended or invalidated in accordance with the control order issued in the control process. As a result, at least the contents information is not executed, reproduced or output. Therefore, contents information that is not encrypted by using a predetermined encryption method is not reproduced, executed, or output.

When information acquired in the acquisition process does not contain information encrypted by using a predetermined encryption method, at least a part of information is not executed, reproduced or output in the information processing method. Owing to such a configuration, the protection of the information against illegal copy can be strengthened, and the protection of the information against illegal copy can be implemented at lower cost.

The embodiment heretofore described may be implemented integrally with hardware as a dedicated apparatus, or may be implemented by making a computer read a program.

### [Example]

Hereafter, an embodiment of the present invention will be described with reference to drawings. The embodiment described hereafter is an example in which an information processing apparatus according to the present invention has been applied to a home game apparatus.

First, a game apparatus according to an embodiment of the present invention will now be described with reference to FIG. 10. FIG. 10 shows a configuration of a game apparatus according to an embodiment of the present invention.

As shown in FIG. 10, a game apparatus 100 is an apparatus for executing a game program recorded in a DVD-ROM 110. The game apparatus 100 includes a DVD-ROM drive 101, a CPU 102, a memory 103, and a decode module 104. They are connected to each other via a bus 105. In addition, a game controller 106 is connected to the bus 105, and a display 107 and a speaker 108 are connected to the decode module 104.

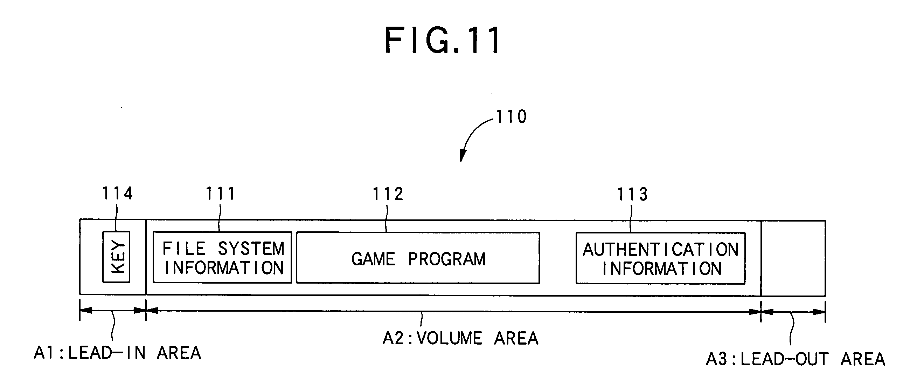

The DVD-ROM drive 101 is an information reading apparatus for reading a game program 112, authentication information 113, or the like from the DVD-ROM 110 (see FIG. 11) having the game program 112, the authentication information 113, or the like recorded thereon. The DVD-ROM drive 101 is based on the CSS, and has a function of decrypting CSS-encrypted information (unraveling the encryption) in cooperation with the decode module 104.

The CPU 102 conducts general control over the game apparatus 100, and executes the game program and execution permission/prohibition decision processing described later.

The memory 103 is, for example, a read only memory. The memory 103 stores various programs and data besides an execution permission/prohibition decision processing program.

The decode module 104 is, for example, an MPEG decode module, and it is a module for decoding and reproducing MPEG-compressed image information and the like. The decode module 104 includes a digital-analog conversion circuit besides a decode circuit. In addition, the decode module 104 is based on the CSS, and has a function of decrypting CSS-encrypted image information in cooperation with the DVD-ROM drive 101. As described later, the authentication information 113 has a DVD video format and is CSS-encrypted image information. The decode module 104 is used to decrypt the authentication information 113 and recognize its contents. In the case where the game apparatus 100 has functions of not only executing the game program recorded on the DVD-ROM but also reproducing a movie recorded on a DVD video disk, it is possible to decrypt and reproduce movie data having the DVD video format and subjected to the CSS encryption by using the decode module 104.

The game apparatus 100 having such a configuration operates as hereafter described. If the user mounts the DVD-ROM 110 on the DVD-ROM drive 101, then the DVD-ROM drive 101 accesses file system information 111 on the DVD-ROM 110, and subsequently reads the game program 112 and the authentication information 113 recorded on the DVD-ROM 110. Nearly simultaneously with the reading operation, the CPU 102 conducts execution permission/prohibition decision processing in cooperation with the DVD-ROM drive 101 and the decode module 104. In the execution permission/prohibition decision processing, the CPU 102 determines whether the game program 112 recorded on the DVD-ROM 110 is genuine, i.e., whether the game program 112 is not an illegally copied program. If the game program 112 is genuine as a result of the execution permission/prohibition decision processing, then the CPU 102 executes the game program 112. On the other hand, if the game program 112 is not genuine, then the CPU 102 does not execute the game program 112.

A recording structure of information recorded on the DVD-ROM 110 will now be described with reference to FIG. 11. FIG. 11 shows a recording structure of information recorded on the DVD-ROM 110. The left side in FIG. 11 is the inner circumference side of the DVD-ROM disk and the right side is the outer circumference side of the DVD-ROM disk.

As shown in FIG. 11, the DVD-ROM 110 is a DVD-ROM disk of single layer type. On the inner circumference side of the DVD-ROM 110, a lead-in area A1 is formed. On its outer circumference side, a volume area A2 is formed. Further, on the outer circumference side, a lead-out area A3 is formed.

The volume area A2 is an ordinary information recording area that can be arbitrarily accessed by operating an information reading apparatus (the DVD-ROM drive 101 is also included in this) for ordinary users having a function of reading information recorded on a DVD-ROM disk, with an ordinary operation method. On the other hand, the lead-in area A1 and the lead-out area A3 are information recording areas that cannot be arbitrarily accessed by operating the information reading apparatus for ordinary users having the function of reading information recorded on a DVD-ROM disk, with the ordinary operation method. The lead-in area A1 and the lead-out area A3 are areas that cannot be arbitrarily accessed by the user, but they are not areas that cannot be accessed at all by the information reading apparatus for ordinary users. In other words, a pickup of the information reading apparatus can be moved to the lead-in area A1 or the lead-out area A3, and those areas can be accessed by specifying an address of the lead-in area A1 or the lead-out area A3 by means of an internal program in the information reading apparatus. On the DVD, some non-recording area exists on a further inner circumference side. However, the non-recording area cannot be accessed by the information reading apparatus for ordinary users. For accessing the area, a special function must be added to the information reading apparatus.

File system information 111 is recorded on the inner circumference side in the volume area A2 of the DVD-ROM 110. The file system information 111 is information for managing information recorded in the volume area A2. The information managed by the file system information 111 contains information recorded subsequently to the file system information 111 in the volume area A2 to indicate names of individual pieces of information, recording addresses, data sizes, data formats and whether encryption has been conducted.

In the volume area A2, the game program 112 is recorded subsequently to the file system information 111. The game program 112 is a computer program for implementing, for example, a competition game, a shooting game, a baseball game, a role playing game or the like. The game program 112 is recorded in such a state that it is not encrypted. Furthermore, since the game program 112 is a program, it is not recorded in a DVD video format. According to contents of a game, not only a game program, but also image information and voice information for reproducing the game can be recorded on the DVD-ROM 110. In this case, image information and voice information can be recorded in a DVD video format (which may be a DVD audio format). In this case, the image information and voice information may be CSS-encrypted (or CPPM-encrypted) and recorded.

In addition, the authentication information 113 is recorded in the volume area A2. The authentication information 113 is, for example, image information corresponding to an image that represents a logo of a disk manufacturer. The format of the authentication information 113 is a DVD video format. In addition, the authentication information 113 is CSS-encrypted and recorded in a process for manufacturing the DVD-ROM disk by a disk manufacturer having legal authority to produce or provide information.

A disk key encrypted by using a master key is recorded in the lead-in area A1 on the DVD-ROM 110. This key is used at the time of the CSS encryption and the CSS decryption. This encrypted disk key is recorded in the lead-in area A1. Therefore, the user cannot read the encrypted disk key arbitrarily. However, it is possible to read the encrypted disk key according to internal control of the information reading apparatus for ordinary users (by a control program incorporated therein).

The CSS, which is an encryption method used to encrypt and decrypt the authentication information 113, will now be described. The CSS will be described hereafter from a general point of view, temporarily leaving the game apparatus 100 according to the embodiment.

The CSS is an information encryption technique developed with the object of protecting the copyright of movie software in the case where mainly movie software is provided as DVD contents, and it is a well known technique. Encryption of contents information to be recorded on a DVD is conducted by using three keys, i.e., a title key, a disk key and a master key. First, the contents information to be recorded on the DVD is subjected to processing such as compression (such as MPEG compression), and scrambled by using the title key. Subsequently, the title key is encrypted by using the disk key, and the encrypted title key is recorded in a sector header area on the DVD. The sector header area is an area that cannot be accessed arbitrarily by the user. Subsequently, the disk key is encrypted by using the master key, and the encrypted disk key is recorded in the lead-in area on the DVD.

In the case where contents information encrypted and recorded on the DVD is reproduced by a reproduction apparatus or the like, the reproduction apparatus or the like must be one based on the CSS. When reproducing the contents information encrypted and recorded on the DVD by using a reproduction apparatus or the like based on the CSS, a decryption process hereafter described is conducted. In other words, the reproduction apparatus or the like based on the CSS holds a master key previously and secretly. First, the reproduction apparatus or the like reads a disk key encrypted and recorded in a lead-in area on the DVD, and decrypts and acquires the disk key by using the master key held secretly by itself. Subsequently, the reproduction apparatus or the like reads a title key encrypted and recorded in a sector-head area on the DVD, and decrypts and acquires the title key by using the disk key acquired from the DVD some time ago. Subsequently, the reproduction apparatus or the like reads contents information recorded in a scrambled state on the DVD, and descrambles the contents information by using the title key acquired from the DVD some time ago. Further the reproduction apparatus or the like reproduces the descrambled contents information. For example, when the contents information is a compressed digital image, the reproduction apparatus or the like decodes the contents information by using an internal decoder (such as an MPEG decoder), conducts digital-analog conversion on the decoded contents information, and outputs resultant analog contents information.

For reproducing the contents information encrypted and recorded on the DVD by using a general-purpose computer, both the DVD-ROM drive and the decode module (such as the MPEG decode module) included in the general-purpose computer must be based on the CSS. When reproducing the contents information encrypted and recorded on the DVD by using a general-purpose computer including a DVD-ROM drive based on the CSS and a decode module based on the CSS, a path authentication process hereafter described is conducted in addition to the above-described decryption process. In other words, before executing the above-described decryption process on the contents information encrypted and recorded on the DVD, a path authentication process is executed between the DVD-ROM drive and the decode module. Specifically, the DVD-ROM drive and the decode module are connected to each other via a computer bus, and they ascertain with each other via the bus that they are based on the CSS. At this time, between the DVD-ROM drive and the decode module, a time varying key that can be recognized by only the DVD-ROM drive and the decode module is created. Thereafter, the above-described decryption process is executed by the DVD-ROM drive and the decode module. When the DVD-ROM drive delivers the title key or the disk key to the decode module in the decryption process, the key is encrypted by the time varying key. When the decode module utilizes the key delivered from the DVD-ROM drive, the key is decrypted by using the time varying key.

The game apparatus 100 according to the present embodiment includes the DVD-ROM drive 101 based on the CSS and the decode module 104 based on the CSS. The game apparatus 100 can decrypt the authentication information subjected to CSS-encryption and recorded on the DVD-ROM 110. At the time of decryption, a disk key 114 recorded in the lead-in area A1 on the DVD-ROM 110 is used.

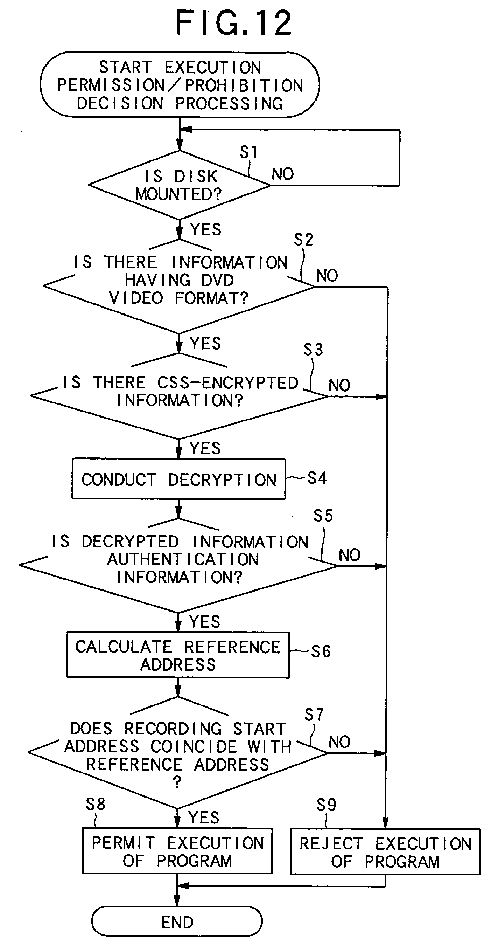

Execution permission/prohibition decision processing in the game apparatus 100 will now be described with reference to FIG. 12. The execution permission/prohibition decision processing is processing of making a decision whether the game program 112 recorded on the DVD-ROM 110 is genuine, i.e., whether the game program 112 is not illegally copied, and conducting control as to whether the game program 112 should be executed on the basis of a result of the decision. This execution permission/prohibition decision processing is conducted under the control of the CPU 102.

As shown in FIG. 12, if the DVD-ROM 110 is mounted on the DVD-ROM drive 101 (YES at step S1), then the CPU 102 determines whether information having the DVD video format has been recorded in the volume area A2 on the DVD-ROM 110 (step S2). Names of individual pieces of information (files) recorded in the volume area A2 are described in the file system information 111, and extensions that differ from format to format are added respectively to the information names. Therefore, the decision whether information having the DVD video format has been recorded in the volume area A2 can be implemented by checking the extension of the information described in the file system information 111.

When information having the DVD video format has not been recorded in the volume area A2 (NO at the step S2), the CPU 102 conducts control for rejecting the execution of the game program 112 (step S9). As a result, the game program 112 is not executed.

On the other hand, if information having the DVD video format has been recorded in the volume area A2 (YES at the step S2), then the CPU 102 subsequently makes a decision whether CSS-encrypted information is contained in the information having the DVD video format (step S3). The decision whether CSS-encrypted information is contained can be implemented by checking a flag recorded in the lead-in area A1.

If CSS-encrypted information is not contained in the information having the DVD video format (NO at the step S3), then the CPU 102 conducts control for rejecting the execution of the game program 112 (step S9). As a result, the game program 112 is not executed.

If CSS-encrypted information is contained in the information having the DVD video format (YES at the step S3), then the CPU 102 decrypts the CSS-encrypted information in cooperation with the DVD-ROM drive 101 and the decode module 104 (step S4).

Subsequently, the CPU 102 makes a decision whether the decrypted information is the authentication information 113 (step S5). This decision is made by finding a checksum value of the decrypted information and comparing the checksum value with a reference value previously recorded in the memory 103. Only when the checksum value of the decrypted information has coincided with the reference value, the CPU 102 judges the decrypted information to be the authentication information 113.

If the encrypted information is not the authentication information 113 (NO at the step S5), then the CPU 102 conducts control for rejecting the execution of the game program 112 (step S9). As a result, the game program 112 is not executed.

On the other hand, if the decrypted information is the authentication information 113 (YES at the step S5), then the CPU 102 subsequently calculates a reference address of the authentication information 113 (step S6). When recording the game program 112 and the authentication information 113 on the DVD-ROM 110 in the manufacture process of the DVD-ROM 110, the disk manufacturer conducts a predetermined arithmetic operation by using the recording address of the game program 112, and sets a value obtained in the arithmetic operation as a recording address of the authentication information 113. Specifically, the disk manufacturer adds a value obtained by dividing the size of the game program 112 by a fixed value to the recording end address of the game program 112, and sets the resultant value as a recording start address of the authentication information 113. Therefore, the address at which the authentication information 113 is recorded in the volume area A2 in the DVD-ROM 110 can be obtained by conducting the above-described predetermined arithmetic operation. At step S6, therefore, the CPU 102 conducts the above-described arithmetic operation, and acquires the resultant value as a reference value.

Subsequently, the CPU 102 detects the actual recording start address of the authentication information 113 actually recorded on the DVD-ROM 110, and compares the actual recording start address with the reference address. In this way, the CPU 102 determines whether the actual recording start address coincides with the reference address (step S7).

If the actual recording start address does not coincide with the reference address (NO at the step S7), then the CPU 102 conducts control for rejecting the execution of the game program 112 (step S9). As a result, the game program 112 is not executed.

On the other hand, if the actual recording start address coincides with the reference address (YES at the step S7), then the CPU 102 conducts control for permitting the execution of the game program 112 (step S8).

Thus, in the game apparatus 100 according to the present embodiment, execution of the game program 112 is permitted, only in the case where authentication information 113 that has the DVD video format, that is CSS-encrypted, and that has a predetermined checksum, is recorded at a predetermined address in the volume area A2 on the DVD-ROM 110. In other words, the game program 112 is not executed in (i) the case where there is no authentication information on the disk, (ii) the case where there is authentication information on the disk, but the authentication information has not the DVD video format, (iii) the case where the authentication information is not CSS-encrypted, or (iv) the case where the authentication information is recorded at an address that is different from a predetermined address calculated by the above-described predetermined arithmetic operation. Therefore, the game program 112 can be protected more strongly against illegal copy.

If a person who attempts to conduct illegal copy copies all information recorded on the DVD-ROM 110 to a commercially available blank DVD-R or the like completely as it is, then the game program thus subjected to illegal copy can be reproduced by the game apparatus 100. However, it is almost impossible. The reason will now be described. Even if the CSS encryption of the authentication information can be unraveled, it is almost impossible to CSS-encrypt the authentication information again. Furthermore, it is almost impossible because of the structure of the CSS to transfer the CSS-encrypted authentication information from sector to sector as it is and produce its copy disk.

Furthermore, in the game apparatus 100 according to the present embodiment, the correct recording address of the authentication information 113 is determined on the basis of the recording end address and the size of the game program 112. If the recording location or size of the game program 112 differs, therefore, the correct recording address of the authentication information 113 also varies. As a result, it becomes more difficult to produce an illegal copy disk, and protection of the game program can be further strengthened.

Furthermore, in the game apparatus 100 according to the present embodiment, it can be determined whether the execution of the game program 112 is permitted, by recording the authentication information 113 in the volume area A2, which can be typically accessed by an information reading apparatus or an information recording apparatus in general use, detecting the authentication information 113, and conducting predetermined decision processing. Furthermore, the widely known CSS is adopted as the encryption method of the authentication information 113. For implementing the copy protection, therefore, a dedicated disk manufacturing apparatus or a dedicated information reading apparatus is not needed. As a result, protection of the game program 112 against illegal copy can be implemented at lower cost.

The present invention can be suitably modified without departing from the spirit or thought of the invention, which can be read from Claims and the whole of the application. A game apparatus, an information processing apparatus, an information recording apparatus and an information processing method involving such a modification, and a computer program and an information recording medium for implementing functions of them are also incorporated in the technical thought of the present invention.

## Claims

1. An information processing apparatus (10) for reproducing or executing information, **characterized by**:
an acquisition unit (11) for acquiring the information;
a processing unit (12) for conducting reproduction processing or execution processing on the information acquired by the acquisition unit (11);
an encryption decision unit (13) for making a decision whether information encrypted by using a predetermined encryption method is contained in the information acquired by the acquisition unit (11); and
a first control unit (14) responsive to a fact that information encrypted by using the predetermined encryption method is not contained in the information acquired by the acquisition unit (11), found as a result of the decision made by the encryption decision unit (13), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

2. The information processing apparatus (20) according to claim 1, **characterized by**:
a format decision unit (21) for making a decision whether information having a predetermined format is contained in the information acquired by the acquisition unit (11); and
a second control unit (22) responsive to a fact that information having the predetermined format is not contained in information acquired by the acquisition unit (11), found as a result of the decision made by the format decision unit (21), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

3. The information processing apparatus (30) according to claim 1 or 2, **characterized by**:
a decryption unit (31) responsive to a fact that information encrypted by using a predetermined encryption method is contained in the information acquired by the acquisition unit (11), for decrypting the information encrypted by using the predetermined encryption method;
an authentication information decision unit (32) for making a decision whether the information decrypted by the decryption unit (31) is authentication information; and
a third control unit (33) responsive to a fact that the decrypted information is not authentication information, found as a result of the decision made by the authentication information decision unit (32), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

4. The information processing apparatus according to claim 3, wherein the authentication information decision unit (32) makes a decision whether the decrypted information is authentication information by determining whether a checksum of the decrypted information is a predetermined value.

5. The information processing apparatus (40) according to claim 3 or 4, **characterized by**:
an address decision unit (41) responsive to a fact that the information decrypted by the decryption unit (31) is the authentication information, for making a decision whether the authentication information has already been recorded at a predetermined address on an information recording medium; and
a fourth control unit (42) responsive to a fact that the authentication information has not been recorded at the predetermined address, found as a result of the decision made by the address decision unit (41), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

6. The information processing apparatus according to claim 5, wherein contents information and the authentication information have already been recorded on the information recording medium, and a value obtained by conducting a predetermined arithmetic operation by using an address of the contents information on the information recording medium has been set as an address of the authentication information on the information recording medium, and
the address decision unit (41) **characterized by**:
an arithmetic operation unit for executing the predetermined arithmetic operation by using the address of the contents information on the information recording medium; and
a comparison unit for determining whether the value at the address of the authentication information on the information recording medium coincides with a value obtained from the arithmetic operation conducted by the arithmetic operation unit by comparing them with each other.

7. The information processing apparatus (50) according to claim 3 or 4, **characterized by**:
a recording layer decision unit (51) responsive to a fact that the information decrypted by the decryption unit (31) is the authentication information, for making a decision whether the authentication information has already been recorded on a predetermined layer of a multilayer information recording medium; and
a fifth control unit (52) responsive to a fact that the authentication information has not been recorded on the predetermined layer, found as a result of the decision made by the recording layer decision unit (51), for controlling the acquisition unit (11) so as to prevent the acquisition unit (11) from further acquiring at least a part of the information, or for controlling the processing unit (12) so as to prevent at least a part of the information acquired by the acquisition unit (11) from being reproduced, executed, or finally output.

8. The information processing apparatus according to any one of claims 3 to 7, wherein the authentication information is image information.

9. The information processing apparatus according to any one of claims 3 to 7, wherein the authentication information is a logo.

10. The information processing apparatus according to any one of claims 3 to 7, wherein the authentication information has a DVD video format as a format thereof.

11. The information processing apparatus according to any one of claims 1 to 10, wherein
the predetermined encryption method is a method of encrypting information to be recorded on an information recording medium by using a key and recording the key in a predetermined recording area on the information recording medium, and
the predetermined recording area is an area that cannot be arbitrarily accessed by operating an information reading apparatus for ordinary users having a function of reading information recorded on the information recording medium, by means of an ordinary operation method.

12. The information processing apparatus according to any one of claims 1 to 10, wherein the predetermined encryption method is the CSS (Content Scramble System).

13. The information processing apparatus according to any one of claims 1 to 12, wherein the acquisition unit (11) is a DVD-ROM drive.

14. The information processing apparatus according to any one of claims 1 to 13, wherein the processing unit (12) comprises an MPEG (Moving Picture Experts Group) decode module.

15. The information processing apparatus according to any one of claims 1 to 14, wherein the information acquired by the acquisition unit (11) comprises a computer program that can be executed in the information processing apparatus.

16. The information processing apparatus according to any one of claims 1 to 14, wherein the information acquired by the acquisition unit (11) comprises a game program that can be executed in the information processing apparatus.

17. A game apparatus comprising the information processing apparatus according to claim 16.

18. An information recording apparatus (60) for recording contents information and authentication information for indicating that the contents information is genuine on an information recording medium, the information recording apparatus (60) **characterized by**:
an address acquisition unit (61) for acquiring an address on the information recording medium on which the contents information should be recorded;
an address setting unit (62) for conducting a predetermined arithmetic operation by using the address of the contents information acquired by the address acquisition unit (61), and for setting a value obtained by the arithmetic operation as an address of the authentication information on the information recording medium;
an encryption unit (63) for encrypting the authentication information by using a predetermined encryption method; and
a recording unit (64) for recording the contents information at the address acquired by the address acquisition unit (61) and recording the authentication encrypted by the encryption unit (63) at the address set by the address setting unit (62).

19. An information recording apparatus (70) for recording contents information and authentication information for indicating that the contents information is genuine on a multilayer information recording medium, the information recording apparatus (70) **characterized by**:
a first recording unit (71) for recording the contents information on some layers of the multilayer information recording medium;
an encryption unit (72) for encrypting the authentication information by using a predetermined encryption method; and
a second recording unit (73) for recording the authentication information encrypted by the encryption unit (72) on one of layers in the multilayer information recording medium other than the layers on which the contents information is recorded.

20. A computer-readable information recording medium (80) having contents information (81) and authentication information (82) for indicating that the contents information (81) is genuine recorded thereon, wherein
the authentication information (82) is recorded in such a state that it has been encrypted by using a predetermined encryption method, and
a value obtained by conducting a predetermined arithmetic operation using a recording address of the contents information (81) is set as a recording address of the authentication information (82).

21. A computer-readable multilayer information recording medium (90) having contents information (91) and authentication information (92) for indicating that the contents information (91) is genuine, recorded thereon, wherein
the contents information (91) is recorded on some layers of the multilayer information recording medium (90), and
the authentication information (92) is encrypted by using a predetermined encryption method and recorded in the encrypted form on one of layers in the multilayer information recording medium other than the layers on which the contents information (91) is recorded.

22. A computer program for causing a computer to function as the information processing apparatus according to any one of claims 1 to 16.

23. An information processing method for reproducing or executing information, **characterized by**:
an acquisition process for acquiring the information;
an encryption decision process for making a decision whether information encrypted by using a predetermined encryption method is contained in the information acquired in the acquisition process;
a control process responsive to a fact that information encrypted by using the predetermined encryption method is not contained in the information acquired in the acquisition process, found as a result of the decision made in the encryption decision process, for issuing a control order to prevent the acquisition process from further acquiring at least a part of the information, or for issuing a control order to prevent at least a part of the information acquired in the acquisition process from being subjected to execution processing and reproduction processing or to prevent the reproduced or executed information from being output; and
a processing process for conducting reproduction processing or execution processing on the information acquired in the acquisition process, and thereby outputting the reproduced or executed information,
wherein, when the control order has been issued in the control process, further acquisition of at least a part of the information is not conducted in the acquisition process, or the execution processing, the reproduction processing, or outputting of reproduced or executed information is not conducted in the processing process.
